# EUROPEAN PATENT SPECIFICATION

(11) **EP 4 055 332 B1**
(45) Date of publication and mention of the grant of the patent: **24.07.2024**
(21) Application number: 20781542.4
(22) Date of filing: 02.10.2020
(51) Int. Cl.: F25D 11/02, F25D 17/06

(54) **REFRIGERATING APPLIANCE**
KÜHLGERÄT
RÉFRIGÉRATEUR

(30) Priority: 05.11.2019 EP 19207120
(43) Date of publication of application: 14.09.2022
(73) Proprietor: ELECTROLUX APPLIANCES AKTIEBOLAG, 105 45 Stockholm (SE)
(72) Inventor: LAZZARINI, Paolo, 33080 Porcia PN (IT); PELLEGRINI, Tommaso, 33080 Porcia PN (IT); PIN, Gilberto, 33080 Porcia PN (IT)
(74) Representative: Electrolux Group Patents
(86) International application number: PCT/EP2020/077695
(87) International publication number: WO 2021/089254

(56) References cited:
- EP-A1- 1 243 880
- EP-A2- 1 176 346
- EP-A2- 2 015 009
- JP-A- 2000 146 398
- US-A1- 2007 144 190
- US-B1- 6 438 978

## Description

### Field of the invention

The present invention generally relates to a refrigerating appliance. More particularly, the present invention relates to a refrigerating appliance with an improved temperature control.

### Background of the invention

Conventional refrigerating appliances comprise one or more storage compartments, which allow refrigerating food and beverage articles through a heat pump refrigeration circuit exploiting the evaporation of a refrigerant fluid that flows in one or more evaporators. The refrigeration circuit also comprises, among other elements, a compressor configured to cause the refrigerant fluid to circulate in the refrigeration circuit, and to increase the pressure, and therefore the temperature, of the refrigerant fluid itself.

As it is well known to those skilled in the art, temperature control inside the storage compartments can be obtained by properly control the flow rate of the compressor, for example by adjusting the speed or the duty cycle thereof.

Refrigerating appliances comprising more storage compartments intended to be at reciprocally different temperatures (also referred to as combined refrigerating appliances) are very common. For example, combined refrigerating appliances for domestic use typically comprise two storage compartments, and namely a first, lower-temperature, storage compartment (commonly referred to as freezer compartment) adapted to be at low temperatures (e.g., in the range [-27, -18] °C) and a second, higher-temperature, storage compartment (commonly referred to as fresh-food compartment) adapted to be at higher temperatures (*e.g.*, in the range [3, 7] °C).

Two main approaches are known for implementing combined refrigerating appliances comprising a lower-temperature storage compartment and a higher-temperature storage compartment.

According to a first approach, the refrigerating circuit is provided with a single evaporator, which is used to refrigerate both the two storage compartments. According to this approach, cold refrigerating air generated at the (single) evaporator is first fed to the lower-temperature storage compartment, where it warms up by thermal exchange with food and beverage articles, and then to the higher-temperature storage compartment.

According to a second approach, the refrigerating circuit is provided with two evaporators, and namely a first evaporator associated to the lower-temperature storage compartment and a second evaporator associated to the higher-temperature storage compartment. According to this approach, the cold refrigerating air generated at an evaporator associated to a storage compartment is (mainly) employed for refrigerating said storage compartment.

Different architectures to implement a refrigeration circuit comprising two evaporators are known in the art.

One architecture provides that the refrigeration circuit has the two evaporators that are fluidly connected in series, whereby the refrigerant fluid firstly flows through a first evaporator and then flows through a second evaporator. Compared to other architectures, a refrigeration circuit in which the evaporators are connected in series is easier to be implemented, requiring less hydraulic system components.

The documents US 2007/144190 A1 and JP 2000 146398 A disclose refrigerating appliances with two different storage compartments.

### Summary of invention

The Applicant has realized that the known solutions for implementing combined refrigerating appliances with a refrigeration circuit comprising two evaporators fluidly connected in series to each other and each associated to a different storage compartment are not particularly satisfactory because affected by temperature control drawbacks.

In a refrigeration circuit comprising two evaporators fluidly connected in series to each other and configured to be crossed by the same refrigerant fluid, independently setting and controlling the temperatures in each storage compartment in an efficient way by adjusting the flow rate of the compressor is not an easy task. Indeed, since the same refrigerator fluid flows in both the two evaporators, adjusting the flow rate of the compressor causes a variation in the pressure and temperature of the refrigerant fluid that causes in turn a temperature variation in both the two storage compartments. This may produce undesired undercooling in one of the two storage compartments.

In view of the above, it is an object of the present invention to provide a refrigerating appliance that is not affected by the abovementioned drawbacks.

The Applicant has devised a solution that allows to control in a better and faster way the temperature of each storage compartment, improving the refrigeration efficiency of the refrigeration circuit by managing the compressor of the refrigerant circuit in a way that takes into account the actual temperatures of the storage compartments.

One or more aspects of the present invention are set out in the independent claims, with advantageous features of the same invention that are indicated in the dependent claims.

An aspect of the present invention relates to a refrigerating appliance.

According to the invention, the refrigerating appliance comprises a first storage compartment and a second storage compartment, the first and second storage compartments being separated from each other.

According to the invention, the refrigerating appliance comprises a refrigeration circuit comprising a first evaporator associated to the first storage compartment and a second evaporator associated to the second storage compartment.

According to the invention, the refrigerating appliance comprises a compressor for causing refrigerant to flow in the refrigeration circuit through the first evaporator and the second evaporator.

According to the invention, the first evaporator, the second evaporator and the compressor are fluidly connected in series.

According to the invention, the refrigerating appliance comprises temperature sensors adapted to sense a first temperature indicative of the temperature inside the first storage compartment and a second temperature indicative of the temperature inside the second storage compartment.

According to the invention, the refrigerating appliance comprises a control unit configured to set a flow rate of the compressor according to both:
- a first difference between the sensed first temperature and a first storage compartment target temperature, and
- a second difference between the sensed second temperature and a second storage compartment target temperature.

According to the invention, the control unit is configured to set the flow rate of the compressor according to an average of said first difference and said second difference.

According to an embodiment of the present invention, the control unit is configured to set the flow rate of the compressor according to an arithmetic mean of said first difference and said second difference.

According to an embodiment of the present invention, the control unit is configured to set the flow rate of the compressor according to a weighted average of said first difference and said second difference.

According to an embodiment of the present invention, said first difference has a lower weight compared to a weight of said second difference in said weighted average.

According to an embodiment of the present invention, said first difference has a higher weight compared to a weight of said second difference in said weighted average.

According to the invention, the first evaporator and the second evaporator are associated with a corresponding fan configured to promote heat exchange between the respective evaporator and the storage compartment associated to the respective evaporator.

According to an embodiment of the present invention, the control unit is configured to set a flow rate of said fan according to a difference between:
- said sensed temperature of the storage compartment associated with the evaporator which is in turn associated with said fan, and
- said target temperature of said storage compartment associated with the evaporator which is in turn associated with said fan.

In this way, the rotation speed of the fan, and therefore the thermal exchange degree between the evaporator associated to said fan and the volume of air inside the storage compartment associated with the evaporator, is advantageously set by taking into consideration the actual temperature of said storage compartment, and particularly, its drift with respect to the storage compartment target temperature.

According to the invention, the first evaporator is associated with a corresponding first fan configured to promote heat exchange between said first evaporator and the first storage compartment.

According to the invention, the second evaporator is associated with a corresponding second fan configured to promote heat exchange between said second evaporator and the second storage compartment.

According to the invention, the control unit is configured to set a flow rate of said first fan according to said first difference.

According to the invention, the control unit is configured to set a flow rate of said second fan according to said second difference.

In this way, occurrences of undercooling are reduced because the flow rate of the compressor is advantageously set to compensate a global temperature drift relating both to the temperature drift in the first storage compartment and to the temperature drift in the second storage compartment, while the flow rate of the first fan is advantageously set to compensate a first local temperature drift relating to the temperature drift in the first storage compartment, and the flow rate of the second fan is advantageously set to compensate a second local temperature drift relating to the temperature drift in the second storage compartment.

According to the invention, the control unit is configured to:
- when the average of said first difference and said second difference is higher than zero, increase the flow rate of the compressor, and
- when the average of said first difference and said second difference is lower than zero, decrease the flow rate of the compressor.

According to an embodiment of the present invention, the control unit is configured to:
- when the first difference is higher than zero, increase the flow rate of the first fan;
- when the first difference is lower than zero, decrease the flow rate of the first fan,
and/or:
- when the second difference is higher than zero, increase the flow rate of the second fan, and
- when the second difference is lower than zero, decrease the flow rate of the second fan.

According to an embodiment of the present invention, the first evaporator is associated with a corresponding first fan configured to promote heat exchange between said first evaporator and the first storage compartment, and no fan is associated with the second evaporator.

According to an embodiment of the present invention, the control unit is configured to set the flow rate of the compressor according to a weighted average of said first difference and said second difference, with said first difference that has a lower weight compared to a weight of said second difference.

In this way, occurrences of undercooling are reduced even with a single fan, since the temperature variation caused by the variation of the flow rate of the compressor is advantageosuly calibrated to have a higher effect in the storage compartment that does not have any fan compared to the other storage compartment having the fan .

According to an embodiment of the present invention, the control unit is configured to set a flow rate of said first fan according to said first difference.

According to an embodiment of the present invention, the control unit is configured to:
- when the weighted average of said first difference and said second difference is higher than zero, increase the flow rate of the compressor, and
- when the weighted average of said first difference and said second difference is lower than zero, decrease the flow rate of the compressor.

According to an embodiment of the present invention, the control unit is configured to:
- when the first difference is higher than zero, increase the flow rate of the first fan;
- when the first difference is lower than zero, decrease the flow rate of the first fan.

According to an embodiment of the present invention, the refrigeration circuit is arranged to have the first evaporator upstream the second evaporator along a flow direction of the refrigerant in said refrigeration circuit.

According to an embodiment of the present invention, the refrigeration circuit further comprises at least one condenser.

According to an embodiment of the present invention, the first storage compartment is a freezer storage compartment, and the second storage compartment is a fresh food storage compartment.

According to an embodiment of the present invention, the compressor is a variable speed compressor, the control unit being configured to set the flow rate of the compressor by setting the speed of the compressor.

According to an embodiment of the present invention, the control unit is configured to set the flow rate of the compressor by setting the duty cycle of the compressor.

According to an embodiment of the present invention, the control unit is configured to set the flow rate of the first and/or second fan by setting the rotation speed of the first and/or second fan.

According to an embodiment of the present invention, the control unit is configured to set the flow rate of the first and/or second fan by setting the duty cycle of the first and/or second fan.Another aspect of the present invention relates to a method for operating a refrigerating appliance.

According to the invention, the refrigerating appliance comprises a first storage compartment and a second storage compartment, the first and second storage compartments being separated from each other.

According to the invention, the refrigerating appliance comprises a refrigeration circuit comprising a first evaporator associated to the first storage compartment, a second evaporator associated to the second storage compartment, and a compressor for causing refrigerant to flow in the refrigeration circuit through the first evaporator and the second evaporator, the first evaporator, the second evaporator and the compressor being fluidly connected in series.

According to the invention, the method comprises sensing a first temperature indicative of the temperature inside the first storage compartment and a second temperature indicative of the temperature inside the second storage compartment.

According to the invention, the method comprises setting a flow rate of the compressor according to both:
- a first difference between the sensed first temperature and a first storage compartment target temperature, and
- a second difference between the sensed second temperature and a second storage compartment target temperature.

According to the invention, the method comprises setting the flow rate of the compressor according to an average of said first difference and said second difference.

According to an embodiment of the present invention, the method comprises setting the flow rate of the compressor according to an arithmetic mean of said first difference and said second difference.

According to an embodiment of the present invention, the method comprises setting the flow rate of the compressor according to a weighted average of said first difference and said second difference.

According to an embodiment of the present invention, said first difference has a lower weight compared to a weight of said second difference in said weighted average.

According to an embodiment of the present invention, said first difference has a higher weight compared to a weight of said second difference in said weighted average.

According to the invention, the first evaporator and the second evaporator are associated with a corresponding fan configured to promote heat exchange between the respective evaporator and the storage compartment associated to the respective evaporator, the method comprising setting a flow rate of said fan according to a difference between:
- said sensed temperature of the storage compartment associated with the evaporator which is in turn associated with said fan, and
- said target temperature of said storage compartment associated with the evaporator which is in turn associated with said fan.

### Brief description of the annexed drawings

These and other features and advantages of the present invention will be made apparent by the following description of some exemplary and non-limitative embodiments thereof; for its better intelligibility, the following description should be read making reference to the attached drawings, wherein:
**Figure 1** schematically illustrates a refrigerating appliance according to a first embodiment of the invention;
**Figure 2** schematically illustrates a refrigerating appliance not forming part of the invention;
**Figure 3** is a flow chart of operations carried out by a control unit of the refrigerating appliance of **Figure 1** or **Figure 2**.

### Detailed description of preferred embodiments of the invention

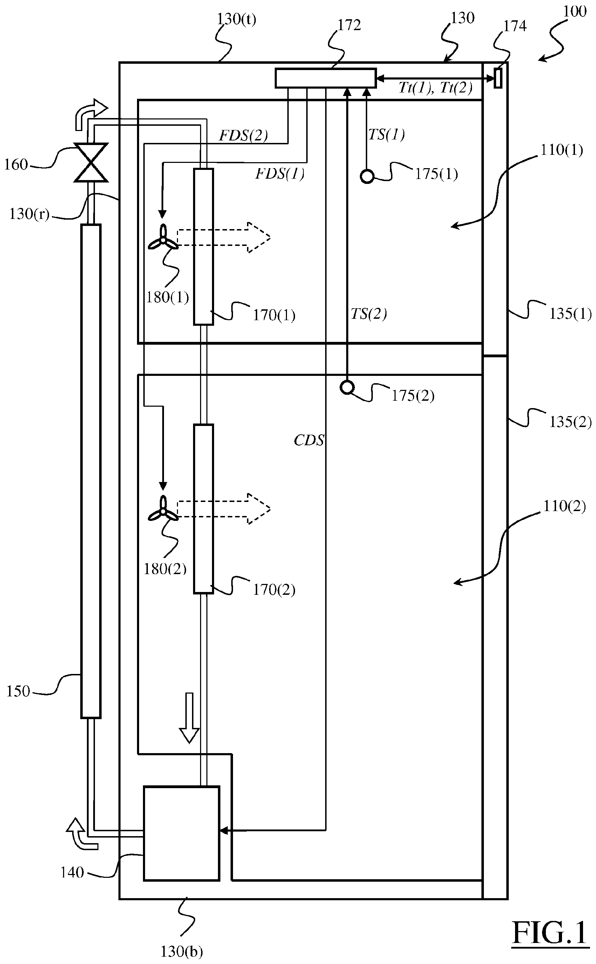

With reference to the drawings, **Figure 1** schematically illustrates a (not-in-scale) cross-sectional side view of a refrigerating appliance **100** according to a first embodiment of the invention.

The refrigerating appliance **100** comprises a number of well known electronic, mechanical and/or electro-mechanical components - however, for the sake of description ease and conciseness, only those being relevant for understanding the invention will be introduced and discussed in the following.

According to an embodiment of the present invention, the refrigerating appliance **100** is a combined-type refrigerating appliance, comprising a first storage compartment **110(1)** and a second storage compartment **110(2)** where food and beverage articles can be stored and preserved by refrigeration at different temperatures.

In the considered example, the first storage compartment **110(1)** is a storage compartment adapted to operate at lower temperature than the second storage compartment **110(2).**

For example, the first storage compartment **110(1)** is a lower-temperature storage compartment, such as a freezer compartment, adapted to be at temperatures below 0°C (e.g., in the range [-27, -18] °C). The second storage compartment **110(2)** is a higher-temperature storage compartment, such as a fresh-food compartment, adapted to be at temperatures above 0°C (e.g., in the range [3, 7] °C). These temperature ranges have to be intended only as non limitative examples, since the concepts of the present invention can be directly applied to any range of temperatures, and also if the first and second storage compartments **110(1), 110(2)** are both adapted to operate at temperatures below 0°C or are both adapted to operate at temperatures above 0°C, provided that the first storage compartment **110(1)** is adapted to operate at different, preferably lower, temperatures than the second storage compartment **110(2).**

In the illustrated example, the first storage compartment **110(1)** is positioned above the second storage compartment **110(2),** however similar considerations apply in case the positions of the two compartments **110(1), 110(2)** are swapped.

Shelves and other structures for supporting and storing food and beverage articles (not illustrated in the figures) may be provided within both the first and second storage compartments **110(1), 110(2).**

According to an embodiment of the present invention, the refrigerating appliance **100** comprises a substantially parallepiped-shaped cabinet **130,** having a top panel **130(t),** a rear panel **130(r),** a bottom panel **130(b)** and side panels (not visible). Naturally, similar considerations apply in case the cabinet **130** has a different shape and/or structure.

According to a preferred embodiment of the present invention, a first door **135(1)** and a second door **135(2)** are hingedly mounted to a front portion of the cabinet **130** to provide selective access to the first storage compartment **110(1)** and to the second storage compartment **110(2),** respectively.

According to an embodiment of the present invention, the refrigerating appliance **100** is equipped with a refrigeration circuit for circulating a refrigeration fluid (briefly referred to as "refrigerant").

According to an embodiment of the present invention, the refrigeration circuit comprises a compressor unit **140,** a condenser unit **150,** a fluid expansion unit **160,** a first evaporator unit **170(1)** associated to the first storage compartment **110(1),** and a second evaporator unit **170(2)** associated to the second storage compartment **110(2).**

According to an embodiment of the present invention, the two evaporator units **170(1)** and **170(2)** are fluidly connected in series to each other in the refrigeration circuit, with the first evaporator unit **170(1)** that is upstream the second evaporator unit **170(2)** along the flow direction of the refrigerant in said refrigeration circuit (illustrated in the figures through bold arrows).

As it is well known to those skilled in the art, the compressor unit **140** carries out the double function of compressing the refrigerant and causing the circulation of refrigerant itself in the refrigeration circuit - so that the refrigerant flows, in sequence, through the condenser unit **150,** the fluid expansion unit **160,** the first evaporator unit **170(1),** and the second evaporator unit **170(2),** before reaching again the compressor unit **140.**

According to a preferred embodiment of the present invention, the compressor unit **140** is located on a bottom portion of the refrigerating appliance **100,** preferably close to the rear panel **130(r)** of the casing **130.**

According to a preferred embodiment of the present invention, the condenser unit **150** is provided on the rear portion of the refrigerating appliance **100,** such as at the rear panel **130(r)** of the cabinet **130.**

According to an embodiment of the present invention, the first evaporator unit **170(1)** is located at the first storage compartment **110(1),** for example close to the rear panel **130(r),** and the second evaporator unit **170(2)** is located at the second storage compartment **110(2),** for example close to the rear panel **130(r).**

Naturally, the concepts of the present invention can be directly applied in case one or more among the compressor unit **140,** the condenser unit **150,** the fluid expansion unit **160,** the first evaporator unit **170(1),** and the second evaporator unit **170(2)** are located in different positions of the refrigerating appliance **100,** provided that the first evaporator unit **170(1)** is arranged in such a way to be able of generating refrigerating air in the first storage compartment **110(1)** and the second evaporator unit **170(2)** is arranged in such a way to be able of generating refrigerating air in the second storage compartment **110(2).**

The compressor unit **140** has an input port fluidly coupled with an output port of the second evaporator unit **170(2)** for receiving refrigerant - in the vapor phase- at a relatively low temperature and at a relatively low pressure.

The compressor unit **140** has an output port fluidly coupled with an input port of the condenser unit **150.**

The compressor unit **140** is configured to compress the refrigerant received by the second evaporator unit **170(2)** so as to increase the pressure and temperature thereof, and to provide the compressed refrigerant to the condenser unit **150.**

The compressed refrigerant, still in the vapor phase, flows through the condenser unit **150,** wherein it condenses to liquid phase by heat exchange with ambient air.

The condenser unit **150** has an output port fluidly coupled with the fluid expansion unit **160** for providing the refrigerant, now in form of a high pressure liquid, to the latter unit.

The fluid expansion unit **160,** for example an expansion valve or a capillary tube, is configured to reduce the pressure, and the temperature, of the refrigerant.

The refrigerant outputted by the fluid expansion unit **160** - which is a low pressure, low temperature fluid in which liquid and vapor phase coexist - is fed to an input port of the first evaporator unit **170(1).**

As the refrigerant flows through the first evaporator unit **170(1),** part of the liquid fraction of the refrigerant turns from liquid into vapor through evaporation, causing air inside the first storage compartment **110(1)** to cool down.

The refrigerant exits the first evaporator unit **170(1)** through an output port thereof, that is fluidly coupled with an input port of the second evaporator unit **170(2).**

As the refrigerant flows through the second evaporator unit **170(2),** the remaining liquid fraction of the refrigerant turns from liquid into vapor through evaporation, causing air inside the second storage compartment **110(2)** to cool down. Once the liquid fraction of the refrigerant is entirely turned into vapor, the temperature of the refrigerant starts to rise up.

According to an embodiment of the present invention, the first evaporator unit **170(1)** is larger than the second evaporator unit **170(2),** so that the temperature in the first storage compartment **110(1)** is lower than the temperature in the second storage compartment **110(2).**

The refrigerant - now in vapor phase - outputted from the output port of the second evaporator unit **170(2)** is then fed again to the compressor unit **140.**

According to an embodiment of the present invention, the compressor unit **140** is capable of setting the volume of refrigerant delivered per time unit (also referred to as "flow rate" or "throughput") under the control of a control unit **172** of the refrigerating appliance **100.** For example, the control unit **172** may be configured to generate and send to the compressor a compressor driving signal *CDS* indicative of a desired flow rate.

As it is well known to those skilled in the art:
- if the flow rate of the compressor unit **140** is increased, the cooling effect of the first and second evaporator units **170(1), 170(2)** is increased, causing a reduction of the temperatures of the corresponding storage compartments **110(1), 110(2)** if other operative parameters are held constant;
- if the flow rate of the compressor unit **140** is decreased, the cooling effect of the first and second evaporator units **170(1), 170(2)** is reduced, causing an increasing of the temperatures of the corresponding storage compartments **110(1), 110(2)** if other operative parameters are held constant.

According to an embodiment of the present invention, the control unit **172** is configured to set the flow rate of the compressor unit **140** by setting the speed thereof, for example to a value proportional to the compressor driving signal *CDS.*

According to an embodiment of the present invention, the control unit **172** is configured to set the flow rate of the compressor unit **140** by setting the duty cycle thereof, for example to a value proportional to the compressor driving signal *CDS.*

As it is well known to those skilled in the art, the higher the speed or the duty cycle of the compressor unit **140,** the higher the flow rate. Conversely, the lower the speed or the duty cycle of the compressor unit **140,** the lower the flow rate.

According to an embodiment of the present invention, the refrigerating appliance **100** comprises a user interface **174** through which a user may input commands to the control unit **172.** For example, as will be described in detail in the following of the present description, the user interface **174** can be advantageously exploited for setting a desired temperature for the first storage compartment **110(1),** hereinafter referred to as first target temperature *Tt(1),* and a desired temperature for the second storage compartment **110(2),** hereinafter referred to as second target temperature *Tt(2).*

Different kind of user interfaces **174** can be provided, from simple rotary knobs inside the storage compartments, to more advanced user interfaces provided with touch screen, buttons, and/or visual display located on one or more of the doors and/or on cabinet. Still more advanced user interfaces **174** can be considered, comprising a wireless communication unit adapted to receive commands and provide data from/to a personal user device, such as a smartphone.

According to the invention, temperature sensors are provided in both the first storage compartment **110(1)** and the second storage compartment **110(2)** for sensing the temperature thereinside.

Particularly, according to a preferred embodiment of the present invention, a first temperature sensor **175(1)** is located inside the first storage compartment **110(1)** and a second temperature sensor **175(2)** is located inside the second storage compartment **110(2).**

According to the present invention, the first and second temperature sensors **175(1), 175(2)** are connected to the control unit **172,** to provide the sensed temperatures to the latter. The first temperature sensor 175(1) is configured to provide a first sensed temperature *Ts(1)* value indicative of the temperature inside the first storage compartment **110(1)** to the control unit **172,** and the second temperature sensor **175(2)** is configured to provide a second sensed temperature *Ts(2)* value indicative of the temperature inside the second storage compartment **110(2)** to the control unit **172.**

According to the present invention, the control unit **172** is configured to set a flow rate of the compressor unit **140** according to both:
- a first difference *D(1)* = *Ts(1)* - *Tt(1)* between the first sensed temperature *Ts(1)* and the first target temperature *Tt(1),* and
- a second difference *D(2)* = *Ts(2)* - *Tt(2)* between the second sensed temperature *Ts(2)* and the second target temperature *Tt(2).*

In other words, the flow rate of the compressor unit **140,** and therefore the cooling effect of the first and second evaporator units **170(1), 170(2),** is set by taking into considerations the actual temperatures of both the first and second storage compartments **110(1), 110(2).**

The flow rate of the compressor unit **140** is set to a value that is a tradeoff between a value capable of compensating for drifts between the actual temperature in the first storage compartment **110(1)** and the first target temperature *Tt(1),* and at the same time capable of compensating for drifts between the actual temperature in the second storage compartment **110(2)** and the first target temperature *Tt(2).*

According to the present invention, the control unit **172** is configured to set a flow rate of the compressor unit **140** according to an average *A* of the first difference *D(1)* = *Ts(1)* - *Tt(1)* and the second difference *D(2)* = *Ts(2) - Tt(2).*

For example, according to an embodiment of the present invention, the control unit **172** is configured to set a flow rate of the compressor unit **140** to a selected value in an allowable flow rate range - spanning from a minimum flow rate value *FRmin* to a maximum flow rate value *FRmax* - based on the value of such average A. For example, negative values of the average A may correspond to low flow rate values, closer to the minimum flow rate value *FRmin,* while positive values of the average A may correspond to high flow rate values, closer to the maximum flow rate value *FRmax.*

According to the preferable embodiment of the invention illustrated in **Figure 1****,** the first and second evaporator units **170(1), 170(2)** are each one associated with a corresponding fan configured to promote heat exchange between the evaporator itself and the storage compartment associated to the evaporator.

According to the present invention, the refrigerating appliance **100** comprises a first fan **180(1)** associated to the first evaporator unit **170(1).** The first fan **180(1)** is configured to promote heat exchange between the evaporator unit **170(1)** and the first storage compartment **110(1).** For example, the first fan **180(1)** may be provided at the first storage compartment **110(1),** such as for example between the evaporator unit **170(1)** and a portion of the first storage compartment **110(1)** close to the rear panel **130(r).**

According to the present invention, the refrigerating appliance **100** comprises a second fan **180(2)** associated to the second evaporator unit **170(2).** The second fan **180(2)** is configured to promote heat exchange between the evaporator unit **170(2)** and the second storage compartment **110(2).** For example, the second fan **180(2)** may be provided at the second storage compartment **110(2),** such as for example between the evaporator unit **170(2)** and a portion of the second storage compartment **110(2)** close to the rear panel **130(r).**

According to the present invention, the control unit **172** is configured to set the volume of air moved per time unit ("flow rate") of the first fan **180(1).** For example, the control unit **172** may be configured to generate and send to the first fan **180(1)** a first fan driving signal *FDS(1)* indicative of a desired flow rate of the first fan **180(1).**

According to the present invention, the control unit **172** is configured to set the volume of air moved per time unit ("flow rate") of the second fan **180(2).** For example, the control unit **172** may be configured to generate and send to the second fan **180(2)** a second fan driving signal *FDS(2)* indicative of a desired flow rate of the second fan **180(2).**

According to an embodiment of the present invention, the control unit **172** is configured to set the flow rate of the first fan **180(1)** by setting the rotation speed thereof, for example to a value proportional to the first fan driving signal *FDS(1).* According to an embodiment of the present invention, the control unit **172** is configured to set the flow rate of the first fan **180(1)** by setting the duty cycle thereof, for example to a value proportional to the first fan driving signal *FDS(1).*

Similarly, according to an embodiment of the present invention, the control unit **172** is configured to set the flow rate of the second fan **180(2)** by setting the rotation speed thereof, for example to a value proportional to the second fan driving signal *FDS(2).* According to an embodiment of the present invention, the control unit **172** is configured to set the flow rate of the second fan **180(2)** by setting the duty cycle thereof, for example to a value proportional to the second fan driving signal *FDS(2).*

As it is well known to those skilled in the art:
- if the flow rate of the first fan **180(1)** is increased, the thermal exchange between the first evaporator **170(1)** and the volume of air inside the first storage compartment **110(1)** is improved, and therefore, if other operative parameters are held constant, the temperature inside the first storage compartment **110(1)** is decreased;
- if the flow rate of the first fan **180(1)** is decreased, the heat exchange between the first evaporator **170(1)** and the volume of air inside the first storage compartment **110(1)** is reduced, and therefore, if other operative parameters are held constant, the temperature inside the first storage compartment **110(1)** is increased;
- if the flow rate of the second fan **180(2)** is increased, the heat exchange between the second evaporator **170(2)** and the volume of air inside the second storage compartment **110(2)** is improved, and therefore, if other operative parameters are held constant, the temperature inside the second storage compartment **110(2)** is decreased;
- if the flow rate of the second fan **180(2)** is decreased, the heat exchange between the second evaporator **170(2)** and the volume of air inside the second storage compartment **110(2)** is reduced, and therefore, if other operative parameters are held constant, the temperature inside the second storage compartment **110(2)** is increased.

According to a preferred embodiment of the present invention, the control unit **172** is configured to set the flow rate of the first fan **180(1)** to a value proportional to the first fan driving signal *FDS(1).*

According to a preferred embodiment of the present invention, the control unit **172** is configured to set the flow rate of the second fan **180(2)** to a value proportional to the second fan driving signal *FDS(2).*

According to the present invention, the control unit **172** is configured to set the flow rate of the compressor unit **140** according to an average A of the first difference *D(1) = Ts(1)* - *Tt(1)* (between the first sensed temperature *Ts(1)* and the first target temperature *T(1)*) and the second difference *D(2)* = *Ts(2)* - *Tt(2)* (between the second sensed temperature *Ts(2)* and the second target temperature *Tt(2)),* with said average A that corresponds to the arithmetic mean of *D(1)* and *D(2).* For example, A may be equal to *(D(1)+D(2))*/*2.*

According to the present invention, the control unit **172** is configured to set the flow rate of the first fan **180(1)** according to the first difference *D(1), i.e.,* according to the difference between the first sensed temperature *Ts(1)* and the first target temperature *Tt(1).*

According to the present invention, the control unit **172** is configured to set the flow rate of the second fan **180(2)** according to the second difference *D(2), i.e.,* according to the difference between the second sensed temperature *Ts(2)* and the second target temperature *Tt(2).*

In other words, the flow rate of the first fan **180(1),** and therefore the heat exchange degree between the first evaporator **170(1)** and the volume of air inside the first storage compartment **110(1),** is set by taking into consideration the actual temperature of the first storage compartment **110(1)** (and particularly, its drift with respect to the first target temperature *Tt(1)).* Similarly, the flow rate of the second fan **180(2),** and therefore the heat exchange degree between the second evaporator **170(2)** and the volume of air inside the second storage compartment **110(2),** is set by taking into consideration the actual temperature of the second storage compartment **110(2)** (and particularly, its drift with respect to the second target temperature *Tt(2)).*

According to a preferred embodiment of the present invention, the control unit **172** is configured to set the flow rate of the first fan **180(1)** to a selected value in an allowable first fan flow rate range - spanning from a minimum first fan flow rate *FS(1)min* to a maximum first fan flow rate *FS(1)max* - based on the value of the first difference *D(1)* = *Ts(1)* - *Tt(1)* between the first sensed temperature *Ts(1)* and the first target temperature *Tt(1).* For example, negative values of the first difference *D(1)* may correspond to low first fan flow rate values, closer to the minimum first fan flow rate *FS(1)min,* while positive values of the first difference *D(1)* may correspond to high first fan flow rate values, closer to the maximum first fan flow rate *FS(1)max.*

According to a preferred embodiment of the present invention, the control unit **172** is configured to set the flow rate of the second fan **180(2)** to a selected value in an allowable second fan flow rate range - spanning from a minimum second fan flow rate *FS(2)min* to a maximum second fan flow rate *FS(2)max* - based on the value of the second difference *D(2)* = *Ts(2)* - *Tt(2)* between the second sensed temperature *Ts(2)* and the second target temperature *Tt(2).* For example, negative values of the second difference *D(2)* may correspond to low second fan flow rate values, closer to the minimum second fan flow rate *FS(2)min,* while positive values of the second difference *D(2)* may correspond to high second fan flow rate values, closer to the maximum second fan flow rate *FS(2)max.*

According to this embodiment of the invention, while the flow rate of the compressor unit **140** is set to compensate a "global temperature drift" relating both to the temperature drift in the first storage compartment **110(1)** (with respect to the first target temperature *Tt(1))* and to the temperature drift in the second storage compartment **110(2)** (with respect to the second target temperature *Tt(2)),* the flow rate of the first fan **180(1)** is set to compensate a "first local temperature drift" relating to the temperature drift in the first storage compartment **110(1)** (with respect to the first target temperature *Tt(1)),* and the flow rate of the second fan **180(2)** is set to compensate a "second local temperature drift" relating to the temperature drift in the second storage compartment **110(2)** (with respect to the second target temperature *Tt(2)).*

The temperature control according to this embodiment of the invention is a two-tier temperature control, with a first tier corresponding to the temperature control obtained by controlling the flow rate of the compressor unit **140,** and a second tier corresponding to the temperature control obtained by controlling the rotation speed of the first and second fans **180(1), 180(2).**

This peculiar control scheme advantageously avoids situations in which one of the storage compartment is subjected to undercooling when its actual temperature is close to its respective target temperature (and therefore it does need to be adjusted), while the other storage compartment has its temperature that is sensibly higher than its respective target temperature (and therefore it has to be sensibly decreased). In this case, the flow rate of the compressor unit **140** is increased since the average A is higher than zero (causing thus a global reduction in the temperatures of both the storage compartment), but the flow rate of the fan associated to the storage compartment that does not require change in temperature is advantageously reduced to counterbalance the undesired (and unnecessary) temperature reduction caused by the flow rate increasing of the compressor.

According to the present invention, the control unit **172** is configured to increase the flow rate of the compressor unit **140** when the average A of the first difference *D(1)* = *Ts(1)* - *Tt(1)* and the second difference *D(2)* = *Ts(2) - Tt(2)* is higher than zero.

According to the present invention, the control unit **172** is configured to decrease the flow rate of the compressor unit **140** when the average A of the first difference *D(1)* = *Ts(1)* - *Tt(1)* and the second difference *D(2) = Ts(2)* - *Tt(2)* is lower than zero.

According to a preferred embodiment of the present invention, the control unit **172** is configured to increase the rotation speed of the first fan **180(1)** when the first difference *D(1)* = *Ts(1)* - *Tt(1)* is higher than zero.

According to a preferred embodiment of the present invention, the control unit **172** is configured to decrease the flow rate of the first fan **180(1)** when the first difference *D(1) = Ts(1)* - *Tt(1)* is lower than zero.

According to a preferred embodiment of the present invention, the control unit **172** is configured to increase the flow rate of the second fan **180(2)** when the second difference *D(2)* = *Ts(2)* - *Tt(2)* is higher than zero.

According a preferred an embodiment of the present invention, the control unit **172** is configured to decrease the flow rate of the second fan **180(2)** when the second difference *D(2)* = *Ts(2)* - *Tt(2)* is lower than zero.

The embodiments of the invention described above make reference to the case illustrated in **Figure 1****,** wherein each evaporator unit **170(1), 170(2)** is associated with a respective fan **180(1), 180(2),** respectively.

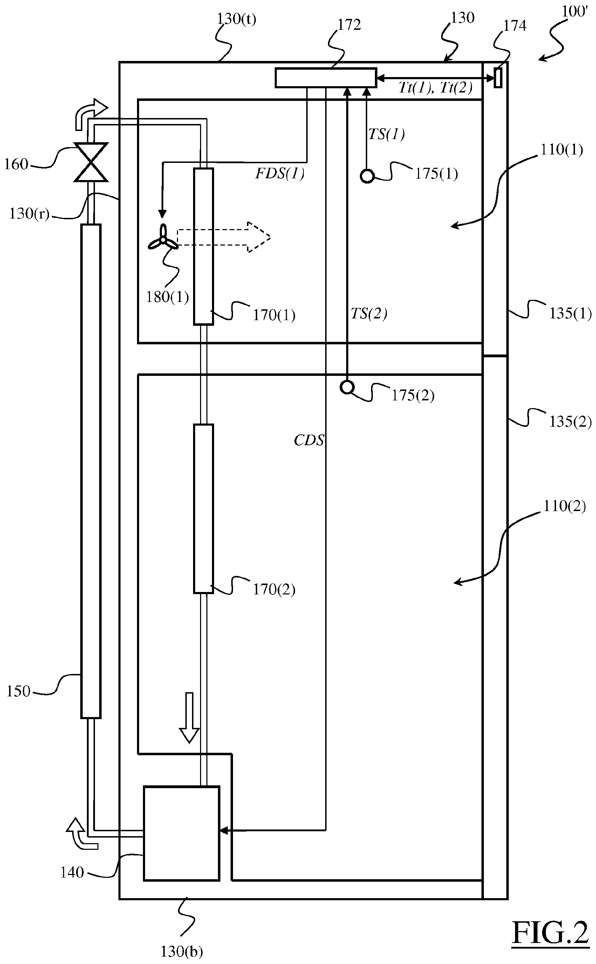

Making reference to a refrigerating appliance **100'** illustrated in **Figure 2** (in which elements corresponding to the ones illustrated in **Figure 1** are identified with the same references), only the first evaporator unit **170(1)** is associated with a corresponding fan **180(1)** . The refrigerating appliance 100' in Figure 2 is not according to the invention.

In this case as well, the control unit **172** may be preferably configured to set a flow rate of the compressor unit **140** according to an average *A* of the first difference *D(1)* = *Ts(1)* - *Tt(1)* and the second difference *D(2)* = *Ts(2)* - *Tt(2).* Moreover, the control unit **172** is configured to set the flow rate of the first fan **180(1)** according to the first difference *D(1)* = *Ts(1)* - *Tt(1).*

The average A of the first difference *D(1)* and the second difference *D(2)* is a weighted average A of the first difference *D(1)* and the second difference *D(2),* with said first difference *D(1)* that has a lower weight *W(1)* compared to a weight *W(2)* of the second difference *D(2).* For example, A may be equal to a weighted arithmetic mean of *D(1)* and *D(2), i.e., (W(1)D(1)*+*W(2)D(2))*/*(W(1)*+*W(2)),* wherein the weight *W(1)* of *D(1)* is lower than the weight *W(2)* of *D(2).*

In this way, the temperature variation caused by the variation of the flow rate of the compressor unit **140** is advantageosuly calibrated to have a higher effect in the storage compartment having the evaporator unit not associated with any fan *(i.e.,* the second storage compartment **110(2))** compared to the other storage compartment having the evaporator unit that is associated with the fan *(i.e.,* the first storage compartment **110(1)),** reducing thus occurrences of undercooling of the storage compartment without fan; in other words, the compressor flow rate is set closer to the temperature requirement of the storage compartment having the evaporator unit not associated with any fan (*i.e.,* the second storage compartment **110(1)),** whereas the temperature requirement of the storage compartment having the evaporator unit that is associated with the fan (*i.e.,* the first storage compartment **110(2))** can be adjusted thorugh the fan flow rate.

The control unit **172** is configured to increase the flow rate of the compressor unit **140** when the weighted average A of the first difference *D(1)* = *Ts(1)* - *Tt(1)* and the second difference *D(2)* = *Ts(2)* - *Tt(2)* is higher than zero.

The control unit **172** is configured to decrease the flow rate of the compressor unit **140** when the weighted average A of the first difference *D(1)* = *Ts(1)* - *Tt(1)* and the second difference *D(2)* = *Ts(2)* - *Tt(2)* is lower than zero.

Like in the embodiment of the invention illustrated in **Figure 1****,** the control unit **172** is preferably configured to increase the flow rate of the first fan **180(1)** when the first difference *D(1)* = *Ts(1)* - *Tt(1)* is higher than zero.

Like in the embodiment of the invention illustrated in **Figure 1****,** the control unit **172** is preferably configured to decrease the flow rate of the first fan **180(1)** when the first difference *D(1)* = *Ts(1)* - *Tt(1)* is lower than zero.

Naturally, the concepts described in relation to **Figure 2** can be directly applied also to the (not illustrated) case in which only the second evaporator unit **170(2)** is associated with a corresponding fan **180(2).**

It has to be appreciated that the concepts of the present invention directly apply also to the case in which the flow rate of the compressor unit **140** of the refrigerating appliance **100'** illustrated in **Figure 2** -which comprises a single fan (in the first storage compartment **110(1))** - is set according to a not-weighted average A of *D(1)* and *D(2),* such as for example according to an average A that corresponds to the arithmetic mean of *D(1)* and *D(2),* like in the embodiment of the invention illustrated in **Figure 1** in which two fans are provided.

Moreover, the concepts of the present invention described with reference to **Figure 2** can be also applied to the case illustrated in **Figure 1** **-** which comprises two fans -, so that also the flow rate of the compressor unit **140** of the refrigerating appliance **100** can be set according to a weighted average of *D(1)* and *D(2).*

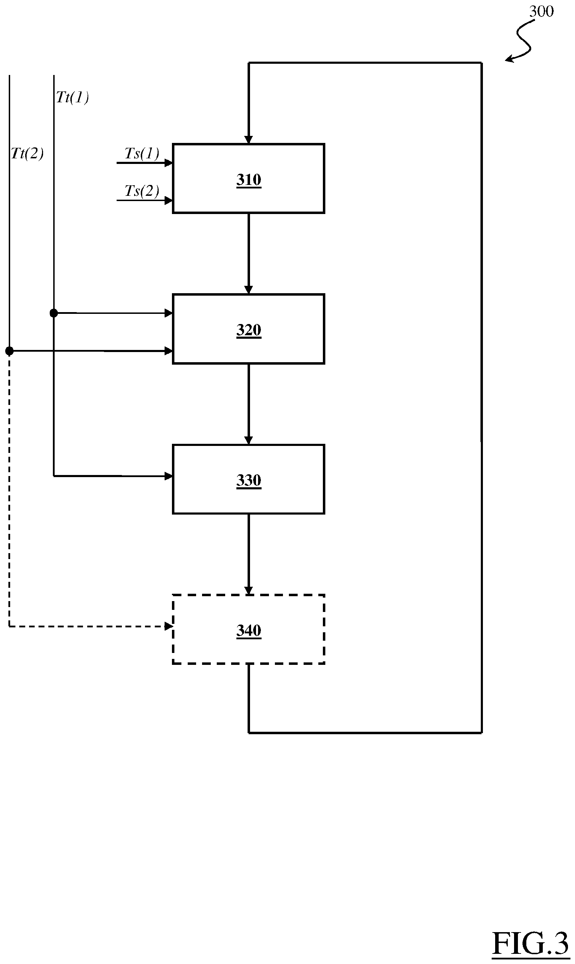

**Figure 3** illustrates a flow chart **300** of the main operations carried out by the control unit **172** according to embodiments of the present invention during the operation of the refrigerating appliance.

According to the present invention, the control unit **172** collects from the first temperature sensor **175(1)** a first sensed temperature *Ts(1)* value indicative of the actual temperature inside the first storage compartment **110(1),** and collects from the second temperature sensor **175(2)** a second sensed temperature *Ts(2)* value indicative of the actual temperature inside the second storage compartment **110(2)** (block **310**).

Then, according to the present invention, the control unit **172** calcualtes a first difference *D(1)* = *Ts(1)* - *Tt(1)* between the first sensed temperature *Ts(1)* and a first target temperature *Tt(1)* (for example received through the user interface **174**), calculates a second difference *D(2)* = *Ts(2)* - *Tt(2)* between the second sensed temperature *Ts(2)* and a second target temperature *Tt(2)* (for example received through the user interface **174**), calculates an average *A of D(1)* and *D(2)* (for example, the average *A* may correspond to *(D(1)+D(2))*/*2* in the case of the embodiment illustrated in **Figure 1** or to *(W(1)D(1)+W(2)D(2))*/*(W(1)+W(2)), W(1)>W(2)* in the case of the embodiment illustrated in **Figure 2**), and accordingly sets a flow rate of the compressor unit **140** according to said average A (block **320**).

At this point, according to the present invention, the control unit **172** sets the flow rate of the first fan **180(1)** according to the first difference *D(1) = Ts(1)* - *Tt(1)* (block **330**).

Then, the control unit **172** sets the flow rate of the second fan **180(2)** according to the second difference *D(2)* = *Ts(2)* - *Tt(2)* (block **340**).

At this point, the flow chart returns to block **310,** for collecting new first and second sensed temperature *Ts(1), Ts(2)* values and repeating the operations of blocks **320, 330** and (if possible) **340** using the new sensed temperature *Ts(1), Ts(2)* values.

Naturally, in order to satisfy local and specific requirements, a person skilled in the art may apply to the invention described above many logical and/or physical modifications and alterations.

Moreover, similar considerations apply in case the refrigeration circuit is provided with more than one condenser unit.

## Claims

1. A refrigerating appliance (100) comprising:
- a first storage compartment (110(1)) and a second storage compartment (110(2)), the first and second storage compartments being separated from each other;
- a refrigeration circuit comprising a first evaporator (170(1)) associated to the first storage compartment (110(1)), a second evaporator (170(2)) associated to the second storage compartment (110(2)), and a compressor (140) for causing refrigerant to flow in the refrigeration circuit through the first evaporator (170(1)) and the second evaporator (170(2)), the first evaporator (170(1)), the second evaporator (170(2)) and the compressor (140) being fluidly connected in series;
- temperature sensors (175(1), 175(2)) adapted to sense a first temperature (Ts(1)) indicative of the temperature inside the first storage compartment (110(1)) and a second temperature (Ts(2)) indicative of the temperature inside the second storage compartment (110(2)),
- a control unit (172) configured to set a flow rate of the compressor (140) according to both:
- a first difference (D(1)) between the sensed first temperature (Ts(1)) and a first storage compartment target temperature (Tt(1)), and
- a second difference (D(2)) between the sensed second temperature (Ts(2)) and a second storage compartment target temperature (Tt(2)),
wherein the control unit (172) is configured to set the flow rate of the compressor (140) according to an average of said first difference (D(1)) and said second difference (D(2)), **characterized in that** the control unit (172) is configured to:
- when the average of said first difference (D(1)) and said second difference (D(2)) is higher than zero, increase the flow rate of the compressor (140), and
- when the average of said first difference (D(1)) and said second difference (D(2)) is lower than zero, decrease the flow rate of the compressor (140).
wherein:
- the first evaporator (170(1)) is associated with a corresponding first fan (180(1)) configured to promote heat exchange between said first evaporator (170(1)) and the first storage compartment (110(1)), and
- the second evaporator (170(2)) is associated with a corresponding second fan (180(2)) configured to promote heat exchange between said second evaporator (170(2)) and the second storage compartment (110(2)), wherein:
- the control unit (172) is configured to set a flow rate of said first fan (180(1)) according to said first difference (D(1)), and
- the control unit (172) is configured to set a flow rate of said second fan (180(2)) according to said second difference (D(2)).

2. The refrigerating appliance (100) of claim 1, wherein the control unit (172) is configured to:
- when the first difference (D(1)) is higher than zero, increase the flow rate of the first fan (180(1));
- when the first difference (D(1)) is lower than zero, decrease the flow rate of the first fan (180(1)),
and/or:
- when the second difference (D(2)) is higher than zero, increase the flow rate of the second fan (180(2)), and
- when the second difference (D(2)) is lower than zero, decrease the flow rate of the second fan (180(2)).

3. The refrigerating appliance (100) of any of the preceding claims, wherein:
- the first evaporator (170(1)) is associated with a corresponding first fan (180(1)) configured to promote heat exchange between said first evaporator (170(1)) and the first storage compartment (110(1)), and
- no fan is associated with the second evaporator (170(2)), wherein:
- the control unit (172) is configured to set the flow rate of the compressor (140) according to a weighted average of said first difference (D(1)) and said second difference (D(2)), with said first difference that has a lower weight compared to a weight of said second difference.

4. The refrigerating appliance (100) of claim 3, wherein the control unit (172) is configured to set a flow rate of said first fan (180(1)) according to said first difference (D(1)).

5. The refrigerating appliance (100) of claim 3 or 4, wherein the control unit (172) is configured to:
- when the weighted average of said first difference (D(1) and said second difference (D(2)) is higher than zero, increase the flow rate of the compressor (140), and
- when the weighted average of said first difference (D(1)) and said second difference (D(2)) is lower than zero, decrease the flow rate of the compressor (140).

6. The refrigerating appliance of claim 3, 4 or 5, wherein the control unit (172) is configured to:
- when the first difference (D(1)) is higher than zero, increase the flow rate of the first fan (180(1));
- when the first difference is lower than zero, decrease the flow rate of the first fan (180(1)).

7. The refrigerating appliance (100) of any of the preceding claims, wherein the refrigeration circuit is arranged to have the first evaporator (170(1)) upstream the second evaporator (170(2)) along a flow direction of the refrigerant in said refrigeration circuit.

8. The refrigerating appliance (100) of any of the preceding claims, wherein the compressor (140) is a variable speed compressor, the control unit (172) being configured to set the flow rate of the compressor (140) by setting the speed of the compressor (140).

9. The refrigerating appliance (100) of any of the preceding claims, wherein the control unit (172) is configured to set the flow rate of the compressor (140) by setting the duty cycle of the compressor (140).

10. A method for operating a refrigerating appliance (100) comprising:
- a first storage compartment (110(1)) and a second storage compartment (110(2), the first and second storage compartments being separated from each other;
- a refrigeration circuit comprising a first evaporator (170(1)) associated to the first storage compartment (110(1)), a second evaporator (170(2)) associated to the second storage compartment (110(2)), and a compressor (140) for causing refrigerant to flow in the refrigeration circuit through the first evaporator (170(1)) and the second evaporator (170(2)), the first evaporator (170(1)), the second evaporator (170(2)) and the compressor (140) being fluidly connected in series, the method comprising;
- sensing a first temperature (Ts(1)) indicative of the temperature inside the first storage compartment (110(1)) and a second temperature (Ts(2)) indicative of the temperature inside the second storage compartment (110(2));
- setting a flow rate of the compressor (140) according to both:
- a first difference (D(1)) between the sensed first temperature (Ts(1)) and a first storage compartment target temperature (Tt(1)), and
- a second difference (D(2)) between the sensed second temperature (Ts(2)) and a second storage compartment target temperature (Tt(2)),- and setting the flow rate of the compressor (140) according to an average of said first difference (D(1)) and said second difference (D(2)), and
- when the average of said first difference (D(1)) and said second difference (D(2)) is higher than zero, increasing the flow rate of the compressor (140), **characterized in that**
- when the average of said first difference (D(1)) and said second difference (D(2)) is lower than zero, decreasing the flow rate of the compressor (140),
wherein:
- the first evaporator (170(1)) is associated with a corresponding first fan (180(1)) configured to promote heat exchange between said first evaporator (170(1 )) and the first storage compartment (110(1)), and
- the second evaporator (170(2)) is associated with a corresponding second fan (180(2)) configured to promote heat exchange between said second evaporator (170(2)) and the second storage compartment (110(2)), and:
- the flow rate of said first fan (180(1)) is set according to said first difference (D(1)), and
- the flow rate of said second fan (180(2)) is set according to said second difference D(2)).

## Patentansprüche

1. Kühlgerät (100), Folgendes umfassend:
- ein erstes Aufbewahrungsfach (110(1)) und ein zweites Aufbewahrungsfach (110(2)), wobei das erste und das zweite Aufbewahrungsfach voneinander getrennt sind,
- einen Kühlkreis, der einen ersten Verdampfer (170(1)) umfasst, der dem ersten Aufbewahrungsfach (110(1)) zugeordnet ist, einen zweiten Verdampfer (170(2)), der dem zweiten Aufbewahrungsfach (110(2)) zugeordnet ist, und einen Kompressor (140), um das Fließen des Kühlmittels in dem Kühlkreis durch den ersten Verdampfer (170(1)) und den zweiten Verdampfer (170(2)) zu bewirken, wobei der erste Verdampfer (170(1)), der zweite Verdampfer (170(2)) und der Kompressor (140) nacheinander in Fluidverbindung stehen,
- Temperatursensoren (175(1), 175(2)), die dafür eingerichtet sind, eine erste Temperatur (Ts(1)) zu erfassen, welche die Temperatur im Inneren des ersten Aufbewahrungsfachs (110(1)) angibt, und eine zweite Temperatur (Ts(2)), welche die Temperatur im Inneren des zweiten Aufbewahrungsfachs (110(2)) angibt,
- eine Steuereinheit (172), die dafür konfiguriert ist, eine Durchflussmenge des Kompressors (140) gemäß den beiden Folgenden einzustellen:
- einer ersten Differenz (D(1)) zwischen der erfassten ersten Temperatur (Ts(1)) und einer Solltemperatur (Tt(1)) des ersten Aufbewahrungsfachs und
- einer zweiten Differenz (D(2)) zwischen der erfassten zweiten Temperatur (Ts(2)) und einer Solltemperatur (Tt(2)) des zweiten Aufbewahrungsfachs,
wobei die Steuereinheit (172) dafür konfiguriert ist, die Durchflussmenge des Kompressors (140) gemäß einem Mittelwert aus der ersten Differenz (D(1)) und der zweiten Differenz (D(2)) einzustellen,
**dadurch gekennzeichnet, dass** die Steuereinheit (172) für Folgendes konfiguriert ist:
- Erhöhen der Durchflussmenge des Kompressors (140), wenn der Mittelwert aus der ersten Differenz (D(1)) und der zweiten Differenz (D(2)) größer als null ist, und
- Verringern der Durchflussmenge des Kompressors (140), wenn der Mittelwert aus der ersten Differenz (D(1)) und der zweiten Differenz (D(2)) kleiner als null ist,
wobei:
- dem ersten Verdampfer (170(1)) ein entsprechendes erstes Gebläse (180(1)) zugeordnet ist, das dafür konfiguriert ist, den Wärmeaustausch zwischen dem ersten Verdampfer (170(1)) und dem ersten Aufbewahrungsfach (110(1)) zu fördern, und
- dem zweiten Verdampfer (170(2)) ein entsprechendes zweites Gebläse (180(2)) zugeordnet ist, das dafür konfiguriert ist, den Wärmeaustausch zwischen dem zweiten Verdampfer (170(2)) und dem zweiten Aufbewahrungsfach (110(2)) zu fördern, wobei:
- die Steuereinheit (172) dafür konfiguriert ist, eine Durchflussmenge des ersten Gebläses (180(1)) gemäß der ersten Differenz (D(1)) einzustellen, und
- die Steuereinheit (172) dafür konfiguriert ist, eine Durchflussmenge des zweiten Gebläses (180(2)) gemäß der zweiten Differenz (D(2)) einzustellen.

2. Kühlgerät (100) nach Anspruch 1, wobei die Steuereinheit (172) für Folgendes konfiguriert ist:
- Erhöhen der Durchflussmenge des ersten Gebläses (180(1)), wenn die erste Differenz (D(1)) größer als null ist,
- Verringern der Durchflussmenge des ersten Gebläses (180(1)), wenn die erste Differenz (D(1)) kleiner als null ist,
und/oder:
- Erhöhen der Durchflussmenge des zweiten Gebläses (180(2)), wenn die zweite Differenz (D(2)) größer als null ist
- Verringern der Durchflussmenge des zweiten Gebläses (180(2)), wenn die zweite Differenz (D(2)) kleiner als null ist.

3. Kühlgerät (100) nach einem der vorhergehenden Ansprüche, wobei:
- dem ersten Verdampfer (170(1)) ein entsprechendes erstes Gebläse (180(1)) zugeordnet ist, das dafür konfiguriert ist, den Wärmeaustausch zwischen dem ersten Verdampfer (170(1)) und dem ersten Aufbewahrungsfach (110(1)) zu fördern, und
- dem zweiten Verdampfer (170(2)) kein Gebläse zugeordnet ist, wobei:
- die Steuereinheit (172) dafür konfiguriert ist, die Durchflussmenge des Kompressors (140) gemäß einem gewichteten Mittelwert aus der ersten Differenz (D(1)) und der zweiten Differenz (D(2)) einzustellen, wobei die erste Differenz eine höhere Gewichtung im Vergleich zu einer Gewichtung der zweiten Differenz aufweist.

4. Kühlgerät (100) nach Anspruch 3, wobei die Steuereinheit (172) dafür konfiguriert ist, eine Durchflussmenge des ersten Gebläses (180(1)) gemäß der ersten Differenz (D(1)) einzustellen.

5. Kühlgerät (100) nach Anspruch 3 oder 4, wobei die Steuereinheit (172) für Folgendes konfiguriert ist:
- Erhöhen der Durchflussmenge des Kompressors (140), wenn der gewichtete Mittelwert aus der ersten Differenz (D(1)) und der zweiten Differenz (D(2)) größer als null ist, und
- Verringern der Durchflussmenge des Kompressors (140), wenn der gewichtete Mittelwert aus der ersten Differenz (D(1)) und der zweiten Differenz (D(2)) kleiner als null ist.

6. Kühlgerät nach Anspruch 3, 4 oder 5, wobei die Steuereinheit (172) für Folgendes konfiguriert ist:
- Erhöhen der Durchflussmenge des ersten Gebläses (180(1)), wenn die erste Differenz (D(1)) größer als null ist, und
- Verringern der Durchflussmenge des ersten Gebläses (180(1)), wenn die erste Differenz kleiner als null ist.

7. Kühlgerät (100) nach einem der vorhergehenden Ansprüche, wobei der Kühlkreis derart angeordnet ist, dass sich der erste Verdampfer (170(1)) prozessaufwärts des zweiten Verdampfers (170(2)) in einer Fließrichtung des Kühlmittels in dem Kühlkreis befindet.

8. Kühlgerät (100) nach einem der vorhergehenden Ansprüche, wobei der Kompressor (140) ein Kompressor mit variabler Drehzahl ist, wobei die Steuereinheit (172) dafür konfiguriert ist, die Durchflussmenge des Kompressors (140) durch Einstellen der Drehzahl des Kompressors (140) einzustellen.

9. Kühlgerät (100) nach einem der vorhergehenden Ansprüche, wobei die Steuereinheit (172) dafür konfiguriert ist, die Durchflussmenge des Kompressors (140) durch Einstellen des Taktzyklus des Kompressors (140) einzustellen.

10. Verfahren zum Betreiben eines Kühlgeräts (100), Folgendes umfassend:
- ein erstes Aufbewahrungsfach (110(1)) und ein zweites Aufbewahrungsfach (110(2)), wobei das erste und das zweite Aufbewahrungsfach voneinander getrennt sind,
- einen Kühlkreis, der einen ersten Verdampfer (170(1)) umfasst, der dem ersten Aufbewahrungsfach (110(1)) zugeordnet ist, einen zweiten Verdampfer (170(2)), der dem zweiten Aufbewahrungsfach (110(2)) zugeordnet ist, und einen Kompressor (140), um das Fließen des Kühlmittels in dem Kühlkreis durch den ersten Verdampfer (170(1)) und den zweiten Verdampfer (170(2)) zu bewirken, wobei der erste Verdampfer (170(1)), der zweite Verdampfer (170(2)) und der Kompressor (140) nacheinander in Fluidverbindung stehen, wobei das Verfahren Folgendes umfasst:
- Erfassen einer ersten Temperatur (Ts(1)), welche die Temperatur im Inneren des ersten Aufbewahrungsfachs (110(1)) angibt, und einer zweiten Temperatur (Ts(2)), welche die Temperatur im Inneren des zweiten Aufbewahrungsfachs (110(2)) angibt,
- Einstellen einer Durchflussmenge des Kompressors (140) gemäß den beiden Folgenden:
- einer ersten Differenz (D(1)) zwischen der erfassten ersten Temperatur (Ts(1)) und einer Solltemperatur (Tt(1)) des ersten Aufbewahrungsfachs und
- einer zweiten Differenz (D(2)) zwischen der erfassten zweiten Temperatur (Ts(2)) und einer Solltemperatur (Tt(2)) des zweiten Aufbewahrungsfachs, und
- Einstellen der Durchflussmenge des Kompressors (140) gemäß einem Mittelwert aus der ersten Differenz (D(1)) und der zweiten Differenz (D(2)) und
- Erhöhen der Durchflussmenge des Kompressors (140), wenn der Mittelwert aus der ersten Differenz (D(1)) und der zweiten Differenz (D(2)) größer als null ist,
**gekennzeichnet durch**:
- Verringern der Durchflussmenge des Kompressors (140), wenn der Mittelwert aus der ersten Differenz (D(1)) und der zweiten Differenz (D(2)) kleiner als null ist,
wobei:
- dem ersten Verdampfer (170(1)) ein entsprechendes erstes Gebläse (180(1)) zugeordnet ist, das dafür konfiguriert ist, den Wärmeaustausch zwischen dem ersten Verdampfer (170(1)) und dem ersten Aufbewahrungsfach (110(1)) zu fördern, und
- dem zweiten Verdampfer (170(2)) ein entsprechendes zweites Gebläse (180(2)) zugeordnet ist, das dafür konfiguriert ist, den Wärmeaustausch zwischen dem zweiten Verdampfer (170(2)) und dem zweiten Aufbewahrungsfach (110(2)) zu fördern, und:
- die Durchflussmenge des ersten Gebläses (180(1)) gemäß der ersten Differenz (D(1)) eingestellt wird und
- die Durchflussmenge des zweiten Gebläses (180(2)) gemäß der zweiten Differenz (D(2)) eingestellt wird.

## Revendications

1. Réfrigérateur (100) comprenant :
- un premier compartiment de stockage (110(1)) et un deuxième compartiment de stockage (110(2)), les premier et deuxième compartiments de stockage étant séparés l'un de l'autre ;
- un circuit de réfrigération comprenant un premier évaporateur (170(1)) associé au premier compartiment de stockage (110(1)), un deuxième évaporateur (170(2)) associé au deuxième compartiment de stockage (110(2)), et un compresseur (140) pour amener du réfrigérant à s'écouler dans le circuit de réfrigération à travers le premier évaporateur (170(1)) et le deuxième évaporateur (170(2)), le premier évaporateur (170(1)), le deuxième évaporateur (170(2)) et le compresseur (140) étant raccordés de façon fluidique en série ;
- des sondes thermiques (175(1), 175(2)) conçues pour détecter une première température (Ts(1)) indicative de la température à l'intérieur du premier compartiment de stockage (110(1)) et une deuxième température (Ts(2)) indicative de la température à l'intérieur du deuxième compartiment de stockage (110(2)),
- une unité de commande (172) configurée pour régler un débit du compresseur (140) en fonction de, à la fois :
- une première différence (D(1)) entre la première température détectée (Ts(1)) et une première température cible de compartiment de stockage (Tt(1)), et
- une deuxième différence (D(2)) entre la deuxième température détectée (Ts(2)) et une deuxième température cible de compartiment de stockage (Tt(2)), dans lequel l'unité de commande (172) est configurée pour régler le débit du compresseur (140) en fonction d'une moyenne de ladite première différence (D(1)) et de ladite deuxième différence (D(2)), **caractérisé en ce que**
l'unité de commande (172) est configurée pour :
- lorsque la moyenne de ladite première différence (D(1)) et de ladite deuxième différence (D(2)) est supérieure à zéro, augmenter le débit du compresseur (140), et
- lorsque la moyenne de ladite première différence (D(1)) et de ladite deuxième différence (D(2)) est inférieure à zéro, diminuer le débit du compresseur (140) ;
dans lequel :
- le premier évaporateur (170(1)) est associé à un premier ventilateur (180(1)) correspondant configuré pour favoriser un échange thermique entre ledit premier évaporateur (170(1)) et le premier compartiment de stockage (110(1)), et
- le deuxième évaporateur (170(2)) est associé à un deuxième ventilateur (180(2)) correspondant configuré pour favoriser un échange thermique entre ledit deuxième évaporateur (170(2)) et le deuxième compartiment de stockage (110(2)), dans lequel :
- l'unité de commande (172) est configurée pour régler un débit dudit premier ventilateur (180(1)) en fonction de ladite première différence (D(1)), et
- l'unité de commande (172) est configurée pour régler un débit dudit deuxième ventilateur (180(2)) en fonction de ladite deuxième différence (D(2)).

2. Réfrigérateur (100) selon la revendication 1, dans lequel l'unité de commande (172) est configurée pour :
- lorsque la première différence (D(1)) est supérieure à zéro, augmenter le débit du premier ventilateur (180(1)) ;
- lorsque la première différence (D(1)) est inférieure à zéro, diminuer le débit du premier ventilateur (180(1)),
et/ou :
- lorsque la deuxième différence (D(2)) est supérieure à zéro, augmenter le débit du deuxième ventilateur (180(2)), et
- lorsque la deuxième différence (D(2)) est inférieure à zéro, diminuer le débit du premier deuxième (180(2)).

3. Réfrigérateur (100) selon l'une quelconque des revendications précédentes, dans lequel :
- le premier évaporateur (170(1)) est associé à un premier ventilateur (180(1)) correspondant configuré pour favoriser un échange thermique entre ledit premier évaporateur (170(1)) et le premier compartiment de stockage (110(1)), et
- aucun ventilateur n'est associé au deuxième évaporateur (170(2)), dans lequel :
- l'unité de commande (172) est configurée pour régler le débit du compresseur (140) en fonction d'une moyenne pondérée de ladite première différence (D(1)) et de ladite deuxième différence (D(2)), ladite première différence ayant un poids inférieur comparé à un poids de ladite deuxième différence.

4. Réfrigérateur (100) selon la revendication 3, dans lequel l'unité de commande (172) est configurée pour régler un débit dudit premier ventilateur (180(1)) en fonction de ladite première différence (D(1)).

5. Réfrigérateur (100) selon la revendication 3 ou la revendication 4, dans lequel l'unité de commande (172) est configurée pour :
- lorsque la moyenne pondérée de ladite première différence (D(1)) et de ladite deuxième différence (D(2)) est supérieure à zéro, augmenter le débit du compresseur (140), et
- lorsque la moyenne pondérée de ladite première différence (D(1)) et de ladite deuxième différence (D(2)) est inférieure à zéro, diminuer le débit du compresseur (140).

6. Réfrigérateur selon la revendication 3, la revendication 4 ou la revendication 5, dans lequel l'unité de commande (172) est configurée pour :
- lorsque la première différence (D(1)) est supérieure à zéro, augmenter le débit du premier ventilateur (180(1)) ;
- lorsque la première différence (D(1)) est inférieure à zéro, diminuer le débit du premier ventilateur (180(1)).

7. Réfrigérateur (100) selon l'une quelconque des revendications précédentes, dans lequel le circuit de réfrigération est agencé pour avoir le premier évaporateur (170(1)) en amont du deuxième évaporateur (170(2)) le long d'une direction d'écoulement du réfrigérant dans ledit circuit de réfrigération.

8. Réfrigérateur (100) selon l'une quelconque des revendications précédentes, dans lequel le compresseur (140) est un compresseur à vitesse variable, l'unité de commande (172) étant configurée pour régler le débit du compresseur (140) en réglant la vitesse du compresseur (140) .

9. Réfrigérateur (100) selon l'une quelconque des revendications précédentes, dans lequel l'unité de commande (172) est configurée pour régler le débit du compresseur (140) en réglant le cycle de service du compresseur (140).

10. Procédé de fonctionnement d'un réfrigérateur (100) comprenant :
- un premier compartiment de stockage (110(1)) et un deuxième compartiment de stockage ((2)), les premier et deuxième compartiments de stockage étant séparés l'un de l'autre ;
- un circuit de réfrigération comprenant un premier évaporateur (170(1)) associé au premier compartiment de stockage (110(1)), un deuxième évaporateur (170(2)) associé au deuxième compartiment de stockage (110(2)), et un compresseur (140) pour amener du réfrigérant à s'écouler dans le circuit de réfrigération à travers le premier évaporateur (170(1)) et le deuxième évaporateur (170(2)), le premier évaporateur (170(1)), le deuxième évaporateur (170(2)) et le compresseur (140) étant raccordés de façon fluidique en série, le procédé comprenant ;
- la détection d'une première température (Ts(1)) indicative de la température à l'intérieur du premier compartiment de stockage (110(1)) et d'une deuxième température (Ts(2)) indicative de la température à l'intérieur du deuxième compartiment de stockage (110(2));
- le réglage d'un débit du compresseur (140) en fonction de, à la fois :
- une première différence (D(1)) entre la première température détectée (Ts(1)) et une première température cible de compartiment de stockage (Tt(1)), et
- une deuxième différence (D(2)) entre la deuxième température détectée (Ts(2)) et une deuxième température cible de compartiment de stockage (Tt(2)), et le réglage du débit du compresseur (140) en fonction d'une moyenne de ladite première différence (D(1)) et de ladite deuxième différence (D(2)) et
- lorsque la moyenne de ladite première différence (D(1)) et de ladite deuxième différence (D(2)) est supérieure à zéro, l'augmentation du débit du compresseur (140), **caractérisé en ce que**
- lorsque la moyenne de ladite première différence (D(1)) et de ladite deuxième différence (D(2)) est inférieure à zéro, la diminution du débit du compresseur (140), dans lequel :
- le premier évaporateur (170(1)) est associé à un premier ventilateur (180(1)) correspondant configuré pour favoriser l'échange thermique entre ledit premier évaporateur (170(1)) et le premier compartiment de stockage (110(1)),et
- le deuxième évaporateur (170(2)) est associé à un deuxième ventilateur (180(2)) correspondant configuré pour favoriser un échange thermique entre ledit deuxième évaporateur (170(2)) et le deuxième compartiment de stockage (110(2)), et :
- le débit dudit premier ventilateur (180(1)) est réglé en fonction de ladite première différence (D(1)), et
- le débit dudit deuxième ventilateur (180(2)) est réglé en fonction de ladite deuxième différence (D(2)).
